# EUROPÄISCHE PATENTSCHRIFT

(11) **EP 2 232 097 B1**
(45) Veröffentlichungstag und Bekanntmachung des Hinweises auf die Patenterteilung: **13.06.2012**
(21) Anmeldenummer: 08855848.1
(22) Anmeldetag: 21.11.2008
(51) Int. Cl.: F16F 15/08, H02K 5/24

(54) **SCHWINGUNGSISOLIERENDE BEFESTIGUNGSVORRICHTUNG**
VIBRATION-INSULATING FASTENING APPARATUS
DISPOSITIF DE FIXATION AVEC ISOLATION AUX VIBRATIONS

(30) Priorität: 03.12.2007 DE 102007058366
(43) Veröffentlichungstag der Anmeldung: 29.09.2010
(73) Patentinhaber: Schuler Pressen GmbH, 73033 Göppingen (DE)
(72) Erfinder: VÖGEL, Gerhard, 88138 Sigmarszell (DE); GÖTZ, Edwin, 88339 Bad Waldsee (DE); HEUDORFER, Ralf, 88284 Wolpertswende (DE)
(74) Vertreter: Otten, Roth, Dobler & Partner
(86) Internationale Anmeldenummer: PCT/DE2008/001939
(87) Internationale Veröffentlichungsnummer: WO 2009/071052

(56) Entgegenhaltungen:
- EP-A- 1 235 329
- DE-U1- 29 722 852
- JP-A- 7 071 498

## Beschreibung

Die vorliegende Erfindung betrifft eine Vorrichtung zur schwingungsisolierenden Befestigung z.B. eines Servomotors an einem Maschinengestell, einer Gehäusewand, allgemein Gestellen von denen Schwingungen ausgehen. Umgekehrt besteht auch Schutz der Umgebung, die Schwingungen von angrenzenden Bauteilen, Motoren etc. ausgesetzt ist. Dies kann insbesondere ein Pressenkörper sein.

### Stand der Technik

Schwingungsisolierende Halterungen dienen dazu die Schwingungen und Stöße, die beispielsweise von einem Elektromotor hervorgerufen werden oder durch Schwingungen der angetriebenen Bauteile, wie zum Beispiel einem Rädergetriebe einem Riementrieb oder dem Produktionsprozeß einer Maschine entstehen, so zu isolieren, dass diese dynamischen Kräfte und Momente nicht mehr oder nur noch stark reduziert auf die sie umgebenden Bauteile einwirken. Durch diese Schwingungsisolierung sollen Schäden, insbesondere Rissen an den umgebenden Bauteilen vorgebeugt werden. Gleichbedeutend wichtig ist der Schutz des Antriebes bzw. Aggregates selbst, speziell der Lagerung des Rotors, des Messsystems sowie Platinen mit schweren Elektronikbauteilen. Besonders bei Umformpressen, deren Bauteile hohen Belastungen und vielen Lastwechseln ausgesetzt werden, ist die Gefahr von Schäden, wie bespielsweise Ausfälle empfindlicher Servomotoren bzw. deren Steuerungsgeber, Rissbildung oder Abrieb durch Schwingungen, besonders hoch und eine Schwingungsisolierung unerlässlich. Außerdem verhindert eine Schwingungsisolierung unerwünschte Geräuschentwicklungen.

Eine derartige Anordnung zur schwingungsisolierenden Halterung eines Elektromotors ist aus der Gebrauchsmusterschrift DE 297 22 852 U1 bekannt. Sie soll eine effektive Schwingungsisolierung gewährleisten, insbesondere bei relativ großen und schwergewichtigen Elektromotoren. Dies soll dadurch erreicht werden, dass zwei Flanschelemente dreidimensional in allen Raumrichtungen und zwar axial, radial und tangential, jeweils über einen bestimmten Bewegungsspielraum hinweg relativ zueinander elastisch beweglich sind, wobei Anschlagmittel zur dreidimensionalen Begrenzung der elastischen Relativbewegung vorhanden sind. Die elastischen Relativbewegungen werden durch in drei Raumrichtungen elastisch verformbare Bauteile ermöglicht. Nachteilig an dieser Anordnung ist, dass der Dämpfungsgrad dieser schwingungsisolierenden Halterung abhängig von der geometrischen Gestaltung des elastischen Elements ist. Um einen gewünschten Dämpfungseffekt zu erhalten, ist eine aufwendige und kostenintensive Auslegung und Herstellung des elastischen Elementes erforderlich. Ein nachträgliches Einstellen oder Ändern des Dämpfungsgrades ist nicht möglich.

### Aufgabe und Vorteil der Erfindung

Die Aufgabe der Erfindung ist es ausgehend vom Stand der Technik eine schwingungsisolierende Befestigung für schwingungsempfindliche Bauteile zu entwickeln, welche einerseits mit einfachen und kostengünstigen Mitteln eine deutliche Reduktion von Schwingungen und Stößen bewirkt und andererseits eine hohe Drehsteife für präzise Regelaufgaben gewährleistet. Erfindungsgemäß wird die Aufgabe mit den Merkmalen des Patentanspruch 1 gelöst. Weitere detaillierte Ausgestaltungen sind in den Unteransprüchen beschrieben.

Diese Aufgabe wird erfindungsgemäß dadurch gelöst, dass sowohl eine axiale Schwingungsisolierung, als auch eine radiale Schwingungsisolierung, als auch eine Drehmomentabstützung mit jeweils unabhängig voneinander gestalteten elastischen Elementen erfolgen, wobei alle eingesetzten Elemente so zusammenwirken, dass eine schwingungstechnische Entkopplung z.B. eines Motorflansches zu einem Befestigungsflansch in allen Freiheitsgraden erreicht wird. Die dabei eingesetzten Bauteile sind handelsüblich oder aus am Markt verfügbaren Werkstoffen einfach herstellbar und somit kostengünstig. Insbesondere sind die Dämpfungsgrade in allen Richtungen speziell der Dämpfungsgrad in axialer und radialer Richtung getrennt veränderbar und über die Vorspannung der Federelemente, veränderbare geometrische Formen und die Werkstoffauswahl vorbestimmbar.

### Die erfindungsgemäße schwingungsisolierende

Befestigungseinrichtung ist so gestaltet, dass sie komplett vormontiert werden kann und somit als eine Einheit an einem Gerät, beispielsweise einem Motor oder an einer Maschinenwandung angebracht werden kann. Dies ermöglicht eine einfache und kostengünstige Montage.

Weitere Einzelheiten und Vorteile der Erfindung ergeben sich aus dem, anhand der Zeichnung dargestellten Ausführungsbeispiel.

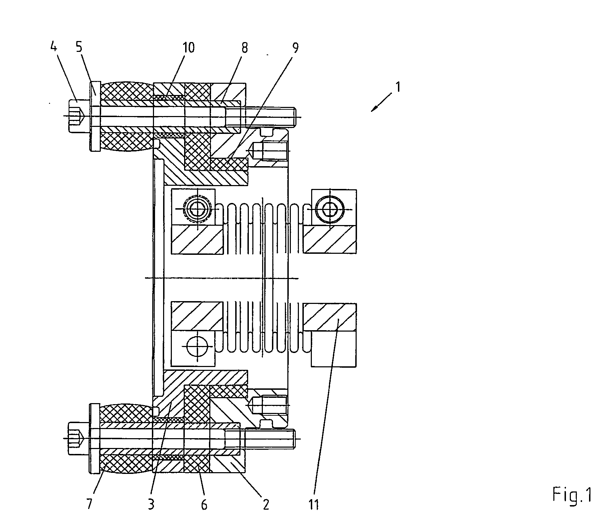

Es zeigt
- Figur 1:: Schnittdarstellung der erfindungsgemäßen schwingungsisolierenden Befestigungsvorrichtung

### Beschreibung eines Ausführungsbeispiels

Figur 1 zeigt die erfindungsgemäße schwingungsisolierende Befestigungsvorrichtung 1 in einer Schnittdarstellung. Beispielhaft wird im Folgenden die schwingungsisolierende Befestigungsvorrichtung 1 zur Befestigung eines Motors an einer Umgebungskonstruktion dargestellt. Die gesamte Befestigungsvorrichtung 1 ist über den Befestigungsflansch 2 mit der hier nicht dargestellten Umgebungskonstruktion verbunden. Die Befestigung erfolgt mittels Befestigungsschrauben 4. Darüber hinaus bewirken die Befestigungsschrauben 4 zusätzliche mit allen Federelementen (6, 7, 9, 10) eine elastische, schwingungsisolierende Verbindung zwischen dem Befestigungsflansch 2 und einem geräteseitigen Flansch 3, welche in diesem Ausführungsbeispiel mit einem nicht dargestellten Motor fest verbunden ist. Der Abtrieb des Motors ist über ein flexibles Kupplungsstück 11 mit den weiteren Bewegungsübertragungsmitteln wirkverbunden. Zwischen dem Befestigungsflansch 2 und dem geräteseitigen Flansch 3 wirkt die Kombination von Elementen aus starren und elastischen Bauteilen als Zentrierung und als Dämpfungselement, sowohl in axialer als auch in radialer Richtung, sowie in allen anderen Richtungen. Die Befestigung erfolgt über mit üblicher Vorspannkraft gegen Festanschlag angezogenen Schrauben. Zur Schwingungsisolierung in axialer Richtung wirkt eine von der Hülsenlänge (8) abhängige und damit einstellbare Vorspannung der Federelemente 6, 7 mittels Befestigungsschrauben 4 und Scheiben 5. Die Federelemente 6 entkoppeln den Befestigungsflansch 2 vom geräteseitigen Flansch 3 in axialer Richtung. Die radiale Zentrierung des geräteseitigen Flansches 3 zum Befestigungsflansch 2 erfolgt über Hülsen 8 und die Federelemente 9 und 10 im Verbund mit den Scheiben 5 und den Befestigungsschrauben 4. Die Hülsen erlauben zugleich ein Anziehen der Schrauben mit definiertem Anzugsmoment, ein nicht beabsichtigtes Lösen der Schrauben 4 ist also ausgeschlossen.

In radialer Richtung wird eine Schwingungsisolierung durch die Federelemente 9 und 10 erreicht. Eine radiale Zentrierung des geräteseitigen Flansches 3 zum Befestigungsflansch 2 erfolgt über die Federelemente 9. Diese spezielle konstruktive Gestaltung gewährleistet mechanischen Formschluss (Durchschlagssicherheit) und Schwingungsisolierung bei gleichzeitig höchster Verdrehsteifigkeit. Um präzisen Regelaufgaben gerecht zu werden ist es erforderlich, dass trotz einer Schwingungsisolierung eine hohe Drehsteife zwischen dem geräteseitigen Flansch 3 und dem Befestigungsflansch 2 vorhanden ist. Diese isolierte Drehmomentabstützung wird bei der erfindungsgemäßen schwingungsisolierenden Motorbefestigung 1 durch die Metallhülsen 8 in Verbindung mit den Federelementen 10 realisiert.

Die Erfindung ist nicht auf dargestellte oder beschriebene Ausführungsbeispiele beschränkt. Sie umfasst vielmehr auch Weiterbildungen der Erfindung im Rahmen der Schutzrechtsansprüche. Insbesondere ist die erfindungsgemäße Befestigungsvorrichtung nicht nur für Motoranbauten, sondern auch für alle anderen denkbaren Geräte einsetzbar.

### Bezugszeichenliste

- 1: schwingungsisolierende Befestigungsvorrichtung
- 2: Befestigungsflansch
- 3: geräteseitiger Flansch
- 4: Befestigungsschrauben
- 5: Scheiben
- 6,7: Federelemente axial
- 8: Hülse
- 9,10: Federelemente radial
- 11: flexible Kupplung

## Patentansprüche

1. Vorrichtung zur schwingungsisolierenden Befestigung von Geräten an einer Maschinenwandung, wobei die Schwingungsisolierung in axialer, radialer und tangentialer Richtung mittels elastischer Elemente erfolgt, welche sowohl mit einem geräteseitigen Flansch (3) als auch mit einem Befestigungsflansch (2) wirkverbunden sind, **dadurch gekennzeichnet, dass** sowohl für die axiale, als auch für die radiale, als auch für die tangentiale Schwingungsisolierung jeweils separate elastische Federelemente (6, 7, 9, 10) verwendet werden, und dass Hülsen (8) in Verbindung mit der Schraubenvorspannung zur Erzielung ausreichender Drehsteife sowohl mit dem Befestigungsflansch (2) als auch mit dem geräteseitigen Flansch (3) in allen Richtungen, insbesondere in Drehrichtung formschlüssig wirkverbunden sind.

2. Vorrichtung nach Anspruch 1, **dadurch gekennzeichnet, dass** der Dämpfungsgrad der axialen Schwingungsisolierung über die Federelemente (6) und (7) mittels den Befestigungsschrauben (4) und den Scheiben (5) über die geometrische Form und Länge der Hülse (8) veränderbar und/oder voreinstellbar ist, wobei der Dämpfungsgrad zusätzlich noch über die Auswahl des Werkstoffes der Feder und deren geometrischen Form einstellbar ist.

3. Vorrichtung nach den Ansprüchen 1 und 2, **dadurch gekennzeichnet, dass** die Federelemente (9) und (10) sowohl eine Schwingungsisolierung in radialer und/oder tangentialer Richtung, als auch eine Zentrierung des Befestigungsflansches (2) zum geräteseitigen Flansch (3) gewährleisten.

4. Vorrichtung nach einem oder mehreren der vorhergehenden Ansprüche 1 bis 3, **dadurch gekennzeichnet, dass** die gesamte schwingungsisolierende Befestigungsvorrichtung (1) vormontierbar und/oder nachrüstbar ist.

## Claims

1. Apparatus for the vibration-insulating fastening of units to a machine wall, wherein the vibration insulation takes place in axial, radial and tangential directions by means of elastic elements, which are operatively connected both to a unit-side flange (3) and to a fastening flange (2), **characterised in that** for the axial, the radial and also for the tangential vibration insulation respectively separate elastic spring elements (6, 7, 9, 10) are used, and sleeves (8) in conjunction with screw pretensioning are operatively connected in a positively locking manner in all directions, in particular in rotational direction, both to the fastening flange (2) and to the unit-side flange (3), in order to achieve a sufficient torsional rigidity.

2. Apparatus according to claim 1, **characterised in that** the degree of damping of the axial vibration insulation can be changed and/or preadjusted by the spring elements (6) and (7) by means of the fastening screws (4) and the discs (5) by the geometrical shape and length of the sleeve (8), wherein the degree of damping can also be adjusted by the selection of material for the spring and its geometric shape.

3. Apparatus according to claims 1 and 2, **characterised in that** the spring elements (9) and (10) ensure vibration insulation in radial and/or tangential direction as well as the centring of the fastening flange (2) to the unit side flange (3).

4. Apparatus according to one or more of the preceding claims 1 to 3, **characterised in that** the entire vibration-insulating fastening apparatus (1) can be premounted and/or retrofitted.

## Revendications

1. Dispositif de fixation d'outils sur une paroi d'une machine avec isolation vis-à-vis des vibrations, cette isolation vis-à-vis des vibrations s'effectuant, en direction axiale radiale et tangentielle au moyen d'éléments élastiques qui sont reliés fonctionnellement à une bride côté outil (3) et à une bride de fixation (2),
**caractérisé en ce que**
l'on utilise, respectivement, pour l'isolation axiale, radiale et tangentielle vis-à-vis des vibrations des éléments de ressort élastiques particuliers (6, 7, 9, 10), et
des manchons (8) sont reliés fonctionnellement par une liaison par la forme dans toutes les directions, en particulier dans la direction de rotation, à la bride de fixation (2) et à la bride côté outil (3), en coopération avec une précontrainte par des vis pour obtenir une rigidité en torsion suffisante.

2. Dispositif conforme à la revendication 1,
**caractérisé en ce que**
le taux d'amortissement de l'isolation axiale vis-à-vis des vibrations par les éléments de ressort (6 et 7) peut être modifié et/ou pré-réglé au moyen de vis de fixation (4) et de rondelles (5) par l'intermédiaire de la forme géométrique et de la longueur des manchons (8), le taux d'amortissement pouvant en outre être réglé par l'intermédiaire du choix du matériau des ressorts ou de leur forme géométrique.

3. Dispositif conforme aux revendications 1 et 2,
**caractérisé en ce que**
les éléments de ressort (9 et 10) garantissent une isolation vis-à-vis des vibrations en direction radiale et/ou tangentielle et également un centrage de la bride de fixation (2) par rapport à la bride côté outil (3).

4. Dispositif conforme à aux moins l'une des revendications précédentes,
**caractérisé en ce que**
le dispositif de fixation (1) avec isolation vis-à-vis des vibrations peut dans sa totalité être pré-monté et/ou préparé postérieurement.
